# EUROPÄISCHE PATENTSCHRIFT

(11) **EP 2 751 937 B1**
(45) Veröffentlichungstag und Bekanntmachung des Hinweises auf die Patenterteilung: **16.10.2019**
(21) Anmeldenummer: 12756166.0
(22) Anmeldetag: 31.08.2012
(51) Int. Cl.: H04B 7/06

(54) **HAUSHALTSGERÄT MIT EINER KOMMUNIKATIONSEINRICHTUNG UND VERFAHREN ZUR KOMMUNIKATION ZWISCHEN EINEM HAUSHALTSGERÄT UND EINEM SEPARATEN GERÄT**
DOMESTIC APPLIANCE WITH A COMMUNICATION ARRANGEMENT AND METHOD FOR THE COMMUNICATION BETWEEN A DOMESTIC APPLIANCE AND A SEPARATE DEVICE
APPAREIL MÉNAGER ÉQUIPÉ D'UN DISPOSITIF DE COMMUNICATION ET PROCÉDÉ DE COMMUNICATION ENTRE UN APPAREIL MÉNAGER ET UN APPAREIL SÉPARÉ

(30) Priorität: 02.09.2011 DE 102011082047
(43) Veröffentlichungstag der Anmeldung: 09.07.2014
(73) Patentinhaber: BSH Hausgeräte GmbH, 81739 München (DE)
(72) Erfinder: GAUGLER, Johannes, 93073 Neutraubling (DE); REITNER, Josef, 93057 Regensburg (DE)
(86) Internationale Anmeldenummer: PCT/EP2012/066972
(87) Internationale Veröffentlichungsnummer: WO 2013/030346

(56) Entgegenhaltungen:
- EP-A2- 0 817 312
- EP-A2- 1 175 021
- WO-A1-2010/017138
- DE-A1- 10 126 816
- DE-A1- 19 957 595
- US-A1- 2003 063 032

## Beschreibung

Die Erfindung betrifft ein Haushaltsgerät, welches eine Kommunikationseinrichtung zur zumindest undirektionalen Kommunikation mit einem von dem Haushaltsgerät separaten Gerät aufweist. Die Kommunikationseinrichtung umfasst ein Kommunikationsmodul sowie eine Antenneneinrichtung. Das Kommunikationsmodul ist zum Verarbeiten von Kommunikationssignalen des separaten Geräts und/oder zum Bereitstellen von Kommunikationssignalen an das separate Gerät ausgebildet. Die Antenneneinrichtung ist zum drahtlosen Abstrahlen und/oder Empfangen der Kommunikationssignale ausgebildet. Die Erfindung betrifft auch ein Verfahren zur zumindest undirektionalen Kommunikation zwischen einer Kommunikationseinrichtung eines Haushaltsgeräts einerseits und einem von dem Haushaltsgerät separaten Gerät andererseits.

Es ist bereits Stand der Technik, ein Haushaltsgerät mit einer Kommunikationseinrichtung auszustatten. Es ist einerseits bekannt, dass eine Vielzahl von Haushaltsgeräten in einem Haushalt untereinander kommunizieren können. Eine derartige Kommunikation dient beispielsweise dazu, die jeweiligen Betriebsprozesse der Haushaltsgeräte aufeinander abzustimmen. So kann beispielsweise verhindert werden, dass zwei Haushaltsgeräte gleichzeitig ihre Betriebsprozesse starten und eine Überlastung des elektrischen Stromnetzes verursachen. Andererseits ist ebenfalls bekannt, dass einzelne Haushaltsgeräte mit einem zentralen Steuerungsgerät im Haushalt kommunizieren können. Ein solches Steuerungsgerät - etwa ein intelligenter Stromzähler - kann dabei die Aufgabe haben, unter Berücksichtigung von Informationen über den aktuellen und gegebenenfalls auch den zukünftigen Preis für elektrische Energie einen Steuerbefehl an das Haushaltsgerät abzugeben, aufgrund dessen ein Betriebsprozess des Haushaltsgerätes eingeleitet wird.

Ein System, bei welchem eine Vielzahl von Haushaltsgeräten mit einem zentralen Gerät kommunizieren, ist beispielsweise aus dem Dokument DE 101 26 816 A1 bekannt.

Vorliegend richtet sich das Interesse auf eine drahtlose Kommunikation zwischen einem Haushaltsgerät und einem separaten Gerät, sei es einem anderen Haushaltsgerät oder aber einem zentralen Steuerungsgerät, etwa einem Stromzähler. Bei dem separaten Gerät kann es sich prinzipiell um ein beliebiges Gerät handeln. Um eine derartige drahtlose Kommunikation zu ermöglichen, beinhaltet, die Kommunikationseinrichtung des Haushaltsgeräts eine Antenneneinrichtung, welche dann zum Abstrahlen bzw. zum Empfangen von Kommunikationssignalen - elektromagnetischen Wellen - dient. Im Falle des Sendens dient die Antenneneinrichtung also zum Abstrahlen der vom Kommunikationsmodul erzeugten Kommunikationssignale; im Falle des Empfangens wandelt die Antenneneinrichtung die sich im Freiraum ausbreitende elektromagnetische Welle in eine leitungsgebundene Welle um und gibt diese an das Kommunikationsmodul ab, welches das empfangene Signal verarbeitet. Die Antenneneinrichtung einerseits und das Kommunikationsmodul andererseits können in ein gemeinsames Funkmodul integriert werden bzw. als einziges Funkmodul bereitgestellt werden. Aus Kostengründen wird dabei ein gemeinsames bzw. gleiches Funkmodul für alle möglichen Typen von Haushaltsgeräten sowie für unterschiedliche Geräteklassen entwickelt. Dies hat den Vorteil, dass die Funkmodule in einer Serienproduktion gefertigt werden können. Es muss nicht für jeden Gerätetyp ein anderes Funkmodul entwickelt werden. Es hat sich jedoch herausgestellt, dass bei manchen Arten bzw. Typen von Haushaltsgeräten die Funkmodule ordnungsgemäß funktionieren, während für andere Gerätetypen die gleichen Funkmodule nur eingeschränkt oder überhaupt nicht geeignet sind.

In der DE 199 57 595 A1 wird ein DECT-Sende-/Empfangsgerät zum Bereitstellen einer Kommunikationsverbindung beschrieben, welches eine Einrichtung zum Feststellen der Qualität der Kommunikationsverbindung umfasst. Eine weitere Einrichtung ist dafür vorgesehen, um abhängig von der Qualität, zwischen unterschiedlichen Sende-/Empfangsantennen umzuschalten.

Die EP 0 817 312 A2 beschreibt eine Antennenvorrichtung, welche eine Einrichtung umfasst, um zwischen einer Magnetstrom-Antenne und einer Elektrisches-Feld-Antenne umzuschalten.

Eine weitere Antennenvorrichtung ist in der US 2003/063032 A1 beschrieben, bei welcher mittels eines Isoliersubstrats ein erster Antennenbereich und ein zweiter Antennenbereich bereitgestellt werden. Der erste Antennenbereich ist empfindlich für eine erste Frequenz, während der zweite Antennenbereich für eine zweite Frequenz, welche niedriger als die erste Frequenz ist, empfindlich ist.

In der EP 1 175 021 A2 wird eine Antennenvorrichtung offenbart, welche eine Mehrzahl von Antennen und eine Antennenschaltung aufweist. Die Antennenschaltung wählt die entsprechende Antenne zum Senden oder Empfangen aus. Die Antennen weisen jeweils eine halbkugelförmige Abstrahlcharakteristik auf und können gemeinsam eine kugelförmige Abstrahlcharakteristik aufweisen.

Es ist Aufgabe der Erfindung, eine Lösung aufzuzeigen, wie eine serienmäßig für eine Vielzahl von Gerätetypen hergestellte Kommunikationseinrichtung bei einem Haushaltsgerät erfolgreich eingesetzt werden kann.

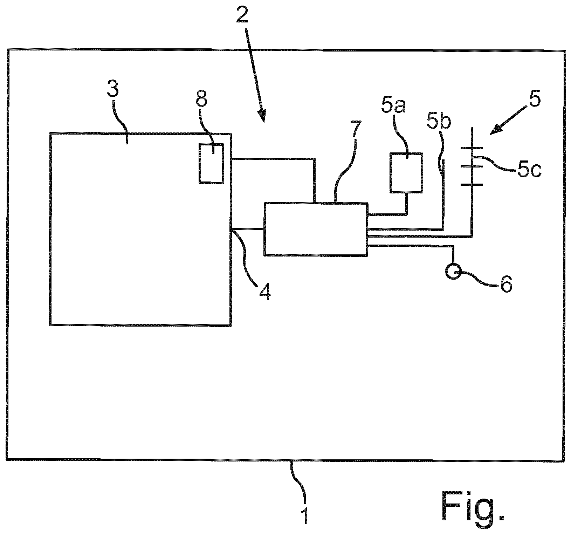

Diese Aufgabe wird erfindungsgemäß durch ein Haushaltsgerät sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Ein erfindungsgemäßes Haushaltsgerät beinhaltet eine Kommunikationseinrichtung, welche zur zumindest undirektionalen Kommunikation mit einem von dem Haushaltsgerät verschiedenen bzw. separaten Gerät dient. Die Kommunikationseinrichtung weist ein Kommunikationsmodul einerseits sowie eine Antenneneinrichtung andererseits auf. Während das Kommunikationsmodul zur Verarbeitung von Kommunikationssignalen des separaten Geräts und/oder zum Bereitstellen von Kommunikationssignalen an das separate Gerät ausgebildet ist, dient die Antenneneinrichtung zum drahtlosen Empfangen und/oder Abstrahlen der Kommunikationssignale. Die Antenneneinrichtung weist zumindest zwei separate Antennen auf, die sich in zumindest einer Eigenschaft bezüglich des Abstrahlens und/oder dem Empfangens der Kommunikationssignale untereinander unterscheiden.

Der Erfindung liegen mehrere Erkenntnisse zugrunde: Sie beruht zunächst auf der Erkenntnis, dass Kosten gespart werden können, wenn für unterschiedlichste Typen von Haushaltsgeräten - Waschmaschinen, Wäschetrockner, Geschirrspülmaschinen und dergleichen - eine einheitliche bzw. gleiche Kommunikationseinrichtung in Serienproduktion hergestellt wird. Eine weitere Erkenntnis besteht darin, dass im Stand der Technik die einheitliche Kommunikationseinrichtung bei manchen Typen von Haushaltsgeräten zufriedenstellend funktioniert, während bei anderen Typen von Haushaltsgeräten die gleiche Kommunikationseinrichtung nicht erfolgreich eingesetzt werden kann. Die Erfindung basiert ferner auf der Erkenntnis, dass die unterschiedlichen Typen von Haushaltsgeräten jeweils unterschiedliche elektrische Eigenschaften besitzen, die Einfluss auf die Abstrahlcharakteristik und die Ausbreitungscharakteristik der elektromagnetischen Wellen haben. Dies kann z. B. vom Blendenmaterial, Blendenlack, von der Lokalisierung der Kommunikationseinrichtung im Gerät und dergleichen abhängen. Die Erfindung baut schließlich auf der Erkenntnis auf, dass diese Probleme dadurch umgangen werden können, dass die Antenneneinrichtung unterschiedliche Antennenstrukturen aufweist. Das erfindungsgemäße Haushaltsgerät hat den Vorteil, dass je nach Situation bzw. Abhängig von dem jeweiligen Gerätetyp die jeweils geeignete Antenne aktiviert bzw. in Betrieb genommen werden kann. Es kann somit eine einheitliche bzw. gleiche Kommunikationseinrichtung bei unterschiedlichen Typen von Haushaltsgeräten erfolgreich eingesetzt werden, und eine leistungsfähige Datenübertragung zwischen der Kommunikationseinrichtung einerseits und dem separaten Gerät andererseits ist stets gewährleistet.

Unter einem Haushaltsgerät wird vorliegend ein Gerät verstanden, welches zur Haushaltsführung eingesetzt wird. Das kann beispielsweise ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrierkombination oder ein Klimagerät. Dies kann aber auch ein Haushaltskleingerät sein, wie beispielsweise ein Kaffeevollautomat oder eine Küchenmaschine. Insbesondere wird unter dem Haushaltsgerät ein programmgesteuertes Gerät verstanden, dessen Betriebsprozesse gemäß abgelegten Betriebsprogrammen durchgeführt werden. Es erweist sich als besonders vorteilhaft, wenn das Haushaltsgerät ein Haushaltsgroßgerät ist, nämlich insbesondere ein Gerät zur Pflege von Wäschestücken oder ein Gerät zur Zubereitung von Lebensmitteln oder aber eine Geschirrspülmaschine.

Also beinhaltet die Antenneneinrichtung zumindest zwei separate Antennen, nämlich insbesondere zumindest zwei unabhängig voneinander speisbare Antennen. Unter einer Antenne wird vorliegend ein einzelnes Antennenelement oder aber ein Antennenarray verstanden, welches eine Mehrzahl von Antennen beinhaltet, die jedoch alle zusammen gespeist werden. Die beiden Antennen der Antenneneinrichtung können also separat voneinander mit elektromagnetischen Wellen gespeist werden.

Die zumindest zwei Antennen unterscheiden sich untereinander in zumindest einer Eigenschaft bezüglich des Abstrahlens und/oder Empfangens der elektromagnetischen Wellen. Es erweist sich als besonders vorteilhaft, wenn sich die zumindest zwei Antennen zumindest in ihren Richtcharakteristiken untereinander unterscheiden. Abhängig von den elektrischen Eigenschaften des jeweiligen Gerätetyps bzw. abhängig von der Einbauposition der Antenneneinrichtung im Haushaltsgerät kann somit die Antenne mit der geeigneten Richtcharakteristik ausgewählt werden, sodass die Ausbreitung der elektromagnetischen Wellen durch die Komponenten des Haushaltsgeräts nicht gehindert wird. Beispielsweise kann eine der zwei Antennen für ein Nahfeld ausgelegt sein und die andere der zwei Antennen für ein Fernfeld.

Das Kommunikationsmodul und die Antenneneinrichtung können in ein gemeinsames Funkmodul integriert sein. Sie können in einem gemeinsamen Gehäuse angeordnet sein. Dann ist die Montage der Kommunikationseinrichtung im Haushaltsgerät besonders einfach; es braucht lediglich ein einziges Modul in das Haushaltsgerät eingebaut werden. Alternativ kann auch vorgesehen sein, dass das Kommunikationsmodul und die Antenneneinrichtung voneinander separate Komponenten sind. Beispielsweise kann hier die Antenneneinrichtung als ein von dem Kommunikationsmodul separates Antennenmodul ausgebildet sein.

Die Kommunikationseinrichtung umfasst eine Koppeleinrichtung, welche zum Koppeln der Antennen mit dem Kommunikationsmodul ausgebildet ist. Die Koppeleinrichtung ermöglicht somit die Ausbreitung der leitungsgebundenen Wellen zwischen dem Kommunikationsmodul einerseits und den Antennen andererseits. Die Koppeleinrichtung kann so ausgebildet sein, dass jeweils wahlweise eine der Antennen mit dem Kommunikationsmodul gekoppelt ist. Also kann jeweils - zu einem bestimmten Zeitpunkt - wahlweise eine der zumindest zwei Antennen aktiviert bzw. in Betrieb genommen werden. Insbesondere wird jeweils wahlweise lediglich eine einzige der zumindest zwei Antennen aktiviert. Dies ermöglicht die Auswahl der jeweils optimalen Antenne, welche für den verwendeten Gerätetyp am besten geeignet ist.

Die Koppeleinrichtung kann auch derart ausgebildet sein, dass jeweils wahlweise eine Untergruppe der Vielzahl von Antennen mit dem Kommunikationsmodul gekoppelt ist. Ganz allgemein gesagt, kann die Koppeleinrichtung so ausgebildet sein, dass bei n > 1 Antennen jeweils eine beliebige Kombination von k < n Antennen mit dem Kommunikationsmodul gekoppelt ist. Je nach Gerätetyp kann die jeweils leistungsfähigste Kombination der Antennen ausgewählt werden.

Die Koppeleinrichtung kann z. B. in Form eines Hochfrequenzumschalters ausgebildet sein. Auf diesem Wege gelingt es, zumindest eine der Antennen ohne viel Aufwand zu aktivieren und mit dem Kommunikationsmodul zuverlässig zu koppeln.

Die Koppeleinrichtung ist eine im Betrieb steuerbare Koppeleinrichtung und weist eine Steuereinheit auf, die zum Ansteuern der Koppeleinrichtung im Betrieb ausgebildet ist. Durch entsprechendes Ansteuern der Koppeleinrichtung kann die Steuereinheit eine der Antennen aktivieren, und zwar im Betrieb des Haushaltsgeräts. Die Steuereinheit kann dabei ein Bestandteil des Kommunikationsmoduls bzw. in das Kommunikationsmodul integriert sein. Eine derartige Auswahl der gewünschten Antenne im Betrieb des Haushaltsgerätes ist besonders vorteilhaft, denn die Steuereinheit kann jeweils automatisch diejenige Antenne auswählen, welche zum jeweiligen Zeitpunkt die leistungsfähigste Datenübertragung zwischen dem Kommunikationsmodul und dem separaten Gerät ermöglicht. Die Kommunikation zwischen dem Haushaltsgerät und dem separaten Gerät erfolgt somit stets zuverlässig und wirkungsvoll.

Die Auswahl einer der Antennen oder einer Untergruppe der Antennen kann beispielsweise derart erfolgen: Die Steuereinheit kann die Qualität eines über die Antenneneinrichtung empfangenen Signals - etwa des Kommunikationssignals des separaten Geräts - überprüfen und in Abhängigkeit von dem empfangenen Signal die Koppeleinrichtung ansteuern. Die Auswahl einer der Antennen bzw. einer Untergruppe aus den Antennen wird somit unter Berücksichtigung des über die Antenneneinrichtung empfangenen Signals getroffen. Zum Beispiel kann die Steuereinheit zunächst die Koppeleinrichtung zwischen unterschiedlichen Antennen umschalten, um zu überprüfen, welche der Antennen für die Kommunikation am besten geeignet ist. Auf diese Weise kann die jeweils leistungsfähigste Antenne ausgewählt werden.

Eine weitere Möglichkeit für die Auswahl der gewünschten Antenne mithilfe eines steuerbaren Hochfrequenzumschalters besteht darin, in der Fertigung des Haushaltsgeräts einen entsprechenden Datenwert in einen nicht-flüchtigen Speicher der Steuereinheit einzuschreiben. Die Aktivierung der gewünschten Antenne erfolgt dann elektronisch durch die Steuereinheit, ohne dass die Koppeleinrichtung im Betrieb noch angesteuert werden kann. Bei dieser Ausführungsform wird die Steuereinheit aufgrund des gespeicherten Datenwertes quasi dazu gezwungen, die Koppeleinrichtung in eine entsprechende Stellung zu schalten und somit die in der Fertigung ausgewählte bzw. festgelegte Antenne zu aktivieren.

In einer alternativen Ausführungsform kann vorgesehen sein, dass die Koppeleinrichtung eine durch eine Person manuell einstellbare Koppeleinrichtung ist. Dies kann beispielsweise so aussehen, dass bei der Fertigung des Haushaltsgeräts eine der Antennen oder eine Untergruppe der Antennen mithilfe eines lösbaren Brückenelements (Jumper) mit dem Kommunikationsmodul gekoppelt wird. Abhängig von dem jeweiligen Gerätetyp wird somit bei der Herstellung des Haushaltsgeräts eine der Antennen oder eine Untergruppe davon mit dem Kommunikationsmodul gekoppelt, während die übrigen Antennen von dem Kommunikationsmodul entkoppelt bleiben. Eine andere Möglichkeit besteht darin, einen manuell betätigbaren Hochfrequenzumschalter einzusetzen, welcher bei der Fertigung des Haushaltsgeräts lediglich in die entsprechende Stellung geschaltet werden soll, und zwar abhängig von dem jeweiligen Gerätetyp.

Die Antenneneinrichtung weist auch einen Anschluss - etwa einen Stecker - auf, welcher zum lösbaren Anschließen einer externen Antenne ausgebildet ist. Die Koppeleinrichtung ist dabei so ausgebildet, dass jeweils wahlweise eine der Antennen oder aber der Anschluss mit dem Kommunikationsmodul gekoppelt wird. An die Kommunikationseinrichtung kann bei dieser Ausführungsform eine externe Antenne angeschlossen werden, die dann beispielsweise auf dem Haushaltsgerät platziert werden kann. Diese Ausführungsform ermöglicht die Kommunikation mit dem separaten Gerät auch in solchen Situationen, in denen - etwa aufgrund der Ausgestaltung des Gehäuses des Haushaltsgeräts - die Ausbreitung der elektromagnetischen Wellen durch das Gehäuse hindurch nicht möglich ist.

Also beinhaltet die Antenneneinrichtung zumindest zwei unterschiedliche Antennen. Es kommen vorliegend im Prinzip verschiedenste, beliebige Antennentypen in Betracht:
Die Antenneneinrichtung kann z. B. zumindest eine Leiterbahnantenne umfassen. Beispielsweise umfasst die Antenneneinrichtung zumindest eine Patch-Antenne und/oder zumindest eine Stabantenne - etwa eine λ/4-Stabantenne und/oder eine 5λ/8-Stabantenne - und/oder zumindest eine Schleifenantenne. Solche Leiterbahnantennen sind besonders platzsparend und kostengünstig. Einerseits kann somit der wertvolle Bauraum im Haushaltsgerät gespart werden; andererseits können auch Kosten gespart werden.

Die zumindest zwei Antennen können auf einem gemeinsamen Substrat bzw. einer gemeinsamen Leiterplatte oder aber jeweils auf einem separaten Substrat angeordnet sein.

Die Antenneneinrichtung kann auch eine an einem Gehäuse des Haushaltsgeräts ausgebildete Antennenstruktur bzw. Resonanzstruktur umfassen. Dies kann z. B. eine in dem Gehäuse ausgebildete Schlitzantenne sein. Es erübrigt sich somit der Einsatz eines separaten Substrats, sondern es wird das ohnehin vorhandene Gehäuse des Haushaltsgeräts genutzt.

Zusätzlich oder alternativ kann die Antenneneinrichtung auch eine Chip-Antenne umfassen. Eine derartige Chip-Antenne ist in Form eines SMD-Bauteils bereitgestellt, welches auf einer im Haushaltsgerät vorhandenen Leiterplatte angebracht werden kann.

Ein erfindungsgemäßes Verfahren ist zur zumindest unidirektionalen Kommunikation zwischen einer Kommunikationseinrichtung eines Haushaltsgeräts einerseits und einem von dem Haushaltsgerät separaten Gerät andererseits ausgelegt. Ein Kommunikationsmodul verarbeitet Kommunikationssignale des separaten Geräts und/oder stellt Kommunikationssignale an das separate Gerät bereit. Eine Antenneneinrichtung empfängt und/oder strahlt die Kommunikationssignale drahtlos ab. Die Antenneneinrichtung umfasst zumindest zwei Antennen, die sich in zumindest einer Eigenschaft bezüglich des Abstrahlens und/oder des Empfangens der Kommunikationssignale untereinander unterscheiden.

Die mit Bezug auf das erfindungsgemäße Haushaltsgerät vorgestellten bevorzugten Ausführungsformen und deren Vorteile gelten entsprechend für das erfindungsgemäße Verfahren.

Weitere Merkmale der Erfindung ergeben sich aus den Ansprüchen, der Figur und der Figurenbeschreibung. Alle vorstehend genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung näher erläutert. Dabei veranschaulicht de einzige Figur in schematischer Darstellung ein Haushaltsgerät mit einer Kommunikationseinrichtung gemäß einer Ausführungsform der Erfindung.

Ein in der Figur in schematischer Darstellung dargestelltes Haushaltsgerät 1 kann beispielsweise ein Gerät zur Pflege von Wäschestücken - etwa eine Waschmaschine oder ein Wäschetrockner - oder eine Geschirrspülmaschine oder aber ein Gerät zur Zubereitung von Lebensmitteln sein, etwa ein Backofen. Das Haushaltsgerät 1 beinhaltet eine Kommunikationseinrichtung 2, welche zur Kommunikation mit einem von dem Haushaltsgerät 1 separaten Gerät (nicht dargestellt) ausgebildet ist. Die Kommunikation bzw. die Datenübertragung kann hier unidirektional oder bidirektional erfolgen. Die Kommunikation kann beispielsweise nach einem Kommunikationsstandard der IEEE 802.11-Familie implementiert werden, etwa dem WLAN-Standard, oder nach einem Kommunikationsstandard der IEEE 802.15-Familie, etwa dem ZigBee-Standard. Die Kommunikation erfolgt drahtlos.

Die Kommunikationseinrichtung 2 umfasst ein Kommunikationsmodul 3, welches an einem Anschluss 4 Kommunikationssignale für das separate Gerät ausgeben bzw. von dem separaten Gerät empfangene Kommunikationssignale empfangen kann. Das Kommunikationsmodul 3 kann also die empfangenen Kommunikationssignale verarbeiten bzw. Kommunikationssignale bereitstellen, die an das separate Gerät gesendet werden sollen. Das Kommunikationsmodul 3 arbeitet nach dem oben genannten Kommunikationsstandard.

Zum Abstrahlen bzw. zum Empfangen der Kommunikationssignale beinhaltet die Kommunikationseinrichtung 2 eine Antenneneinrichtung 5 mit einer Vielzahl von Antennen 5a bis 5c, die jeweils unterschiedliche Antennentypen bzw. Antennenarten sein können. Die Antennen 5a bis 5c unterscheiden sich in ihren Richtcharakteristiken untereinander. Beispielsweise können die Antennen 5a bis 5c folgende Antennenarten beinhalten:
- zumindest eine Leiterbahnantenne, nämlich insbesondere zumindest eine Patch-Antenne und/oder zumindest eine Stabantenne und/oder zumindest eine Schleifenantenne;
- zumindest eine Chip-Antenne, nämlich ein SMD-Bauteil, welches eine Leiterbahnantenne beinhaltet;
- eine an einem Gehäuse des Haushaltsgeräts ausgebildete Antennenstruktur, etwa eine im Gehäuse ausgebildete Schlitzantenne.

Im Prinzip kann die Antenneneinrichtung 5 beliebige Antennen beinhalten, die sich in ihren Richtcharakteristiken voneinander unterscheiden.

Die Kommunikationseinrichtung 2 umfasst auch einen Anschluss 6 - nämlich einen Stecker -, welcher zum Anschließen einer nicht dargestellten externen Antenne dient. An den Anschluss 6 kann die Bedienperson also eine externe Antenne anschließen, welche sich dann außerhalb des Gehäuses befindet. Die externe Antenne kann lösbar angeschlossen werden - sie kann also an den Anschluss angeschlossen und von diesem wieder zerstörungsfrei gelöst werden.

Zum Koppeln der Antenneneinrichtung 5 und des Anschlusses 6 mit dem Kommunikationsmodul 3 beinhaltet die Kommunikationseinrichtung 2 eine Koppeleinrichtung 7, welche im Ausführungsbeispiel in Form eines steuerbaren Hochfrequenzumschalters ausgebildet ist. Über die Koppeleinrichtung 7 kann jeweils wahlweise eine der Antennen 5a, 5b, 5c oder aber der Anschluss 6 mit dem Kommunikationsmodul 3 verbunden bzw. gekoppelt werden. Dies bedeutet, dass im Ausführungsbeispiel zu einem bestimmten Zeitpunkt lediglich eine der Antennen 5a, 5b, 5c oder aber der Anschluss 6 mit dem Kommunikationsmodul 4 verbunden sein kann.

Zur Ansteuerung der Koppeleinrichtung 7 beinhaltet das Kommunikationsmodul 3 eine Steuereinheit 8. Die Steuereinheit 8 kann Steuersignale an die Koppeleinrichtung 7 abgeben, mit welchen die Koppeleinrichtung 7 zwischen unterschiedlichen Stellungen umgeschaltet werden kann.

Eine derartige Kommunikationseinrichtung 2 kann im Prinzip in einem beliebigen Haushaltsgerät 1 eingesetzt werden, nämlich unabhängig von dem jeweiligen Gerätetyp. Die Kommunikation mit dem separaten Gerät kann stets gewährleistet werden, denn in Abhängigkeit von dem Gerätetyp kann die jeweils optimale Antenne 5a bis 5c bzw. der Anschluss 6 aktiviert werden. Diese Aktivierung kann beispielsweise auch im Betrieb automatisch erfolgen, nämlich mittels der Steuereinheit 8. Die Steuereinheit 8 kann die empfangenen Kommunikationssignale auf ihre Qualität hin überprüfen und in Abhängigkeit von diesen Kommunikationssignalen bzw. von deren Qualität die jeweils leistungsfähigste Antenne 5a, 5b, 5c oder aber den Anschluss 6 auswählen. Diese Auswahl kann z. B. nach jedem Einschalten des Haushaltsgeräts getroffen werden. Die Steuereinheit 8 kann hier alle Antennen 5a, 5b, 5c bzw. den Anschluss 6 "ausprobieren" und diejenige Antenne 5a, 5b, 5c für den Betrieb des Haushaltsgeräts aktivieren, die die leistungsfähigste Datenübertragung ermöglicht.

Alternativ zu einer situationsabhängigen Ansteuerung der Koppeleinrichtung 7 im Betrieb kann auch vorgesehen sein, dass die entsprechende Speicherstelle eines nicht-flüchtigen Speichers der Steuereinheit 8 mit einem entsprechenden Datenwert beschrieben wird, und zwar bei der Fertigung des Haushaltsgeräts 1. Aufgrund dieses Datenwerts schaltet die Steuereinheit 8 die Koppeleinrichtung 7 dann in die festgelegte Stellung, so dass die in der Fertigung bereits ausgewählte Antenne 5a, 5b, 5c oder der Anschluss 6 aktiviert wird.

### Bezugszeichenliste

- 1: Haushaltsgerät
- 2: Kommunikationseinrichtung
- 3: Kommunikationsmodul
- 4: Anschluss
- 5: Antenneneinrichtung
- 5a, 5b, 5c: Antennen
- 6: Anschluss
- 7: Koppeleinrichtung
- 8: Steuereinheit

## Patentansprüche

1. Haushaltsgerät (1) mit einer Kommunikationseinrichtung (2) zur zumindest unidirektionalen Kommunikation mit einem von dem Haushaltsgerät (1) separaten Gerät, wobei die Kommunikationseinrichtung (2) ein Kommunikationsmodul (3), welches zum Verarbeiten von Kommunikationssignalen des separaten Geräts und/oder zum Bereitstellen von Kommunikationssignalen an das separate Gerät ausgebildet ist, sowie eine Antenneneinrichtung (5) aufweist, welche zum drahtlosen Abstrahlen und/oder Empfangen der Kommunikationssignale ausgebildet ist, **dadurch gekennzeichnet, dass** die Antenneneinrichtung (5) zumindest zwei Antennen (5a, 5b, 5c), die sich in zumindest einer Eigenschaft bezüglich des Abstrahlens und/oder des Empfangens der Kommunikationssignale untereinander unterscheiden und eine an einem Gehäuse des Haushaltsgeräts (1) ausgebildete Antennenstruktur umfassen, sowie einen Anschluss (6) zum lösbaren Anschließen einer externen Antenne (5a, 5b, 5c) außerhalb des Gehäuses des Haushaltsgeräts aufweist, und das Haushaltsgerät (1) die Kommunikationseinrichtung (2) beinhaltet, wobei die Kommunikationseinrichtung (2) eine im Betrieb steuerbare Koppeleinrichtung (7) zum Koppeln der Antennen (5a, 5b, 5c) mit dem Kommunikationsmodul (3) und eine Steuereinheit (8) zum Ansteuern der Koppeleinrichtung (7) im Betrieb aufweist, wobei die Koppeleinrichtung (7) so ausgebildet ist, dass jeweils wahlweise eine der Antennen (5a, 5b, 5c) oder der Anschluss mit dem Kommunikationsmodul (3) gekoppelt ist, und die Steuereinheit (8) dazu eingerichtet ist, die Koppeleinrichtung (7) zwischen unterschiedlichen Antennen und dem Anschluss umzuschalten, um zu überprüfen, welche der Antennen oder der Anschluss für die Kommunikation am besten geeignet ist.

2. Haushaltsgerät (1) nach Anspruch 1, **dadurch gekennzeichnet, dass** sich die zumindest zwei Antennen (5a, 5b, 5c) in ihren Richtcharakteristiken untereinander unterscheiden.

3. Haushaltsgerät (1) nach Anspruch 1 oder 2, **dadurch gekennzeichnet, dass** die Koppeleinrichtung (7) ein Hochfrequenzumschalter ist.

4. Haushaltsgerät (1) nach einem der vorhergehenden Ansprüche, **dadurch gekennzeichnet, dass** die Steuereinheit (8) dazu ausgelegt ist, zur Auswahl einer der Antennen (5a, 5b, 5c) die Koppeleinrichtung (7) in Abhängigkeit von einem über die Antenneneinrichtung (5) empfangenen Signal anzusteuern.

5. Haushaltsgerät (1) nach einem der vorhergehenden Ansprüche, **dadurch gekennzeichnet, dass** die Antenneneinrichtung (5) zumindest eine Leiterbahnantenne umfasst.

6. Haushaltsgerät (1) nach Anspruch 5, **dadurch gekennzeichnet, dass** die Antenneneinrichtung (5) zumindest eine Patch-Antenne (5a, 5b, 5c) und/oder zumindest eine Stabantenne und/oder zumindest eine Schleifenantenne umfasst.

7. Haushaltsgerät (1) nach einem der vorhergehenden Ansprüche, **dadurch gekennzeichnet, dass** die Antenneneinrichtung (5) eine in dem Gehäuse des Haushaltsgeräts (1) ausgebildete Schlitzantenne umfasst.

8. Haushaltsgerät (1) nach einem der vorhergehenden Ansprüche, **dadurch gekennzeichnet, dass** die Antenneneinrichtung (5) eine Chip-Antenne (5a, 5b, 5c) umfasst.

9. Verfahren zur zumindest unidirektionalen Kommunikation zwischen einer Kommunikationseinrichtung (2) eines Haushaltsgeräts (1) einerseits und einem von dem Haushaltsgerät (1) separaten Gerät andererseits, wobei ein Kommunikationsmodul (3) der Kommunikationseinrichtung (2) Kommunikationssignale des separaten Geräts verarbeitet und/oder Kommunikationssignale an das separate Gerät bereitstellt, und eine Antenneneinrichtung (5) der Kommunikationseinrichtung (2) die Kommunikationssignale drahtlos empfängt und/oder abstrahlt, **dadurch gekennzeichnet, dass** die Antenneneinrichtung (5) zumindest zwei Antennen (5a, 5b, 5c), die sich in zumindest einer Eigenschaft bezüglich des Abstrahlens und/oder des Empfangens der Kommunikationssignale untereinander unterscheiden und eine an einem Gehäuse des Haushaltsgeräts (1) ausgebildete Antennenstruktur umfassen, sowie einen Anschluss (6) zum lösbaren Anschließen einer externen Antenne (5a, 5b, 5c) außerhalb des Gehäuses des Haushaltsgeräts aufweist, und die Kommunikationseinrichtung (2) im Haushaltsgerät (1) beinhaltet angeordnet wird, wobei die Kommunikationseinrichtung (2) eine im Betrieb steuerbare Koppeleinrichtung (7) zum Koppeln der Antennen (5a, 5b, 5c) mit dem Kommunikationsmodul (3) und eine Steuereinheit (8) zum Ansteuern der Koppeleinrichtung (7) im Betrieb aufweist, wobei die Koppeleinrichtung (7) jeweils wahlweise eine der Antennen (5a, 5b, 5c) oder den Anschluss mit dem Kommunikationsmodul (3) koppelt und die Steuereinheit (8) die Koppeleinrichtung (7) zwischen unterschiedlichen Antennen und dem Anschluss umschaltet, um zu überprüfen, welche der Antennen oder der Anschluss für die Kommunikation am besten geeignet ist.

## Claims

1. Household appliance (1) with a communication facility (2) for at least unidirectional communication with an appliance which is separate from the household appliance (1), wherein the communication facility (2) has a communication module (3), which is embodied to process communication signals of the separate appliance and/or to provide communication signals to the separate appliance, as well as an antenna facility (5), which is embodied to wirelessly emit and/or receive the communication signals, **characterised in that** the antenna facility (5) has at least two antennae (5a, 5b, 5c), which differ from one another in terms of at least one property with respect to the mutual emitting and/or receiving of communication signals and comprise an antenna structure embodied on a housing of the household appliance (1), as well as a terminal (6) for the detachable connection of an external antenna (5a, 5b, 5c) outside of the housing of the household appliance, and the household appliance (1) contains the communication facility (2), wherein the communication facility (2) has a coupling facility (7) which can be controlled during operation for coupling the antennae (5a, 5b, 5c) to the communication module (3) and a control unit (8) for activating the coupling facility (7) during operation, wherein the coupling facility (7) is embodied so that in each case one of the antennae (5a, 5b, 5c) or the terminal is optionally coupled to the communication module (3), and the control unit (8) is designed to switch the coupling facility (7) between different antennae and the terminal in order to check which of the antennae or the terminal is best suited to the communication.

2. Household appliance (1) according to claim 1, **characterised in that** the at least two antennae (5a, 5b, 5c) differ from one another in terms of their directional characteristics.

3. Household appliance (1) according to claim 1 or 2, **characterised in that** the coupling facility (7) is a high frequency switch.

4. Household appliance (1) according to one of the preceding claims, **characterised in that** the control unit (8) is designed to activate the coupling facility (7) as a function of a signal received by way of the antenna facility (5) in order to select one of the antennae (5a, 5b, 5c).

5. Household appliance (1) according to one of the preceding claims, **characterised in that** the antenna facility (5) comprises at least one conductor path antenna.

6. Household appliance (1) according to claim 5, **characterised in that** the antenna facility (5) comprises at least one patch antenna (5a, 5b, 5c) and/or at least one rod antenna and/or at least one loop antenna.

7. Household appliance (1) according to one of the preceding claims, **characterised in that** the antenna facility (5) comprises a slot antenna embodied in the housing of the household appliance (1).

8. Household appliance (1) according to one of the preceding claims, **characterised in that** the antenna facility (5) comprises a chip antenna (5a, 5b, 5c).

9. Method for at least unidirectional communication between a communication facility (2) of a household appliance (1) on the one hand and an appliance which is separate from the household appliance (1) on the other hand, wherein a communication module (3) of the communication facility (2) processes communication signals of the separate appliance and/or provides communication signals to the separate appliance, and an antenna facility (5) of the communication facility (2) receives and/or emits the communication signals wirelessly, **characterised in that** the antenna facility (5) has at least two antennae (5a, 5b, 5c) which differ from one another at least in terms of one property with respect to the mutual emitting and/or receiving of the communication signals, and comprise an antenna structure embodied on a housing of the household appliance (1), as well as a terminal (6) for the detachable connection of an external antenna (5a, 5b, 5c) outside of the housing of the household appliance, and the communication facility (2) is arranged in the household appliance (1), wherein the communication facility (2) has a coupling facility (7) which can be controlled during operation for coupling the antennae (5a, 5b, 5c) to the communication module (3) and a control unit (8) for activating the coupling facility (7) during operation, wherein the coupling facility (7) in each case optionally couples one of the antennae (5a, 5b, 5c) or the terminal to the communication module (3) and the control unit (8) switches the coupling facility (7) between different antennae and the terminal in order to check which of the antennae or the terminal is best suited to the communication.

## Revendications

1. Appareil ménager (1) équipé d'un dispositif de communication (2) pour communiquer au moins de manière unidirectionnelle avec un appareil séparé de l'appareil ménager (1), dans lequel le dispositif de communication (2) comprend un module de communication (3) conçu pour traiter des signaux de communication de l'appareil séparé et/ou pour fournir des signaux de communication à l'appareil séparé ainsi qu'un dispositif à antennes (5) conçu pour émettre et/ou recevoir sans fil les signaux de communication,
**caractérisé en ce que** le dispositif à antennes (5) comprend au moins deux antennes (5a, 5b, 5c) qui diffèrent dans au moins une propriété d'émission et/ou de réception des signaux de communication et qui comprennent une structure d'antenne formée sur une carcasse de l'appareil ménager (1), ainsi qu'une connexion (6) pour connecter de façon détachable une antenne externe (5a, 5b, 5c) à l'extérieur de la carcasse de l'appareil ménager, et l'appareil ménager (1) contient le dispositif de communication (2), dans lequel le dispositif de communication (2) comprend un dispositif de couplage (7) pouvant être commandé pendant le fonctionnement pour coupler les antennes (5a, 5b, 5c) avec le module de communication (3) et un module de commande (8) pour exciter le dispositif de couplage (7) pendant le fonctionnement, et le dispositif de couplage (7) est configuré de manière à ce que respectivement, sélectivement, une des antennes ou la connexion soit couplée au module de communication (3), et le module de commande (8) est configuré de manière à commuter l'unité de couplage (7) entre différentes antennes et la connexion, afin de vérifier laquelle des antennes ou de la connexion est appropriée au mieux pour la communication.

2. Appareil ménager (1) selon la revendication 1, **caractérisé en ce que** les au moins deux antennes (5a, 5b, 5c) se différencient dans leur directivité.

3. Appareil ménager (1) selon la revendication 1 ou 2, **caractérisé en ce que** le dispositif de couplage (7) est un commutateur de haute fréquence.

4. Appareil ménager (1) selon l'une des revendications précédentes, **caractérisé en ce que** le module de commande (8) est configuré de manière à exciter le dispositif de couplage (7) pour sélectionner une des antennes (5a, 5b, 5c) en fonction d'un signal reçu par le biais du dispositif à antennes (5).

5. Appareil ménager (1) selon l'une des revendications précédentes, **caractérisé en ce que** le dispositif à antennes (5) comprend au moins une antenne à piste conductrice.

6. Appareil ménager (1) selon la revendication 5, **caractérisé en ce que** le dispositif à antennes (5) comprend au moins une antenne patch (5a, 5b, 5c) et/ou au moins une antenne bâton et/ou au moins une antenne cadre.

7. Appareil ménager (1) selon l'une des revendications précédentes, **caractérisé en ce que** le dispositif à antennes (5) comprend une antenne à fente formée dans la carcasse de l'appareil ménager (1).

8. Appareil ménager (1) selon l'une des revendications précédentes, **caractérisé en ce que** le dispositif à antennes (5) comprend au moins une antenne à puce (5a, 5b, 5c).

9. Procédé de communication au moins unidirectionnelle entre un dispositif de communication (2) d'un appareil ménager (1) d'une part et un appareil séparé de l'appareil ménager (1) d'autre part, dans lequel un module de communication (3) du dispositif de communication (2) traite des signaux de communication de l'appareil séparé et/ou fournit des signaux de communication à l'appareil séparé, et un dispositif à antennes (5) du dispositif de communication (2) reçoit et/ou envoie sans fil les signaux de communication,
**caractérisé en ce que** le dispositif à antennes (5) comprend au moins deux antennes (5a, 5b, 5c) qui diffèrent dans au moins une propriété d'émission et/ou de réception des signaux de communication et qui comprennent une structure d'antenne formée sur une carcasse de l'appareil ménager (1), ainsi qu'une connexion (6) pour connecter de façon détachable une antenne externe (5a, 5b, 5c) à l'extérieur de la carcasse de l'appareil ménager, et le dispositif de communication (2) est agencé de façon à être contenu dans l'appareil ménager (1), dans lequel le dispositif de communication (2) comprend un dispositif de couplage (7) pouvant être commandé pendant le fonctionnement pour coupler les antennes (5a, 5b, 5c) avec le module de communication (3) et un module de commande (8) pour exciter le dispositif de couplage (7) pendant le fonctionnement, le dispositif de couplage (7) couple respectivement, sélectivement, une des antennes (5a, 5b, 5c) ou la connexion au module de communication (3), et le module de commande (8) commute l'unité de couplage (7) entre différentes antennes et la connexion, afin de vérifier laquelle des antennes ou de la connexion est appropriée au mieux pour la communication.
